# EUROPÄISCHE PATENTSCHRIFT

(11) **EP 2 002 203 B1**
(45) Veröffentlichungstag und Bekanntmachung des Hinweises auf die Patenterteilung: **21.07.2010**
(21) Anmeldenummer: 07711857.8
(22) Anmeldetag: 08.03.2007
(51) Int. Cl.: G01B 11/25

(54) **VERFAHREN UND SYSTEM ZUR FORMMESSUNG EINER SPIEGELNDEN OBERFLÄCHE**
METHOD AND SYSTEM FOR MEASURING THE SHAPE OF A REFLECTIVE SURFACE
PROCEDE ET SYSTEME DE MESURE DE LA FORME D`UNE SURFACE REFLECHISSANTE

(30) Priorität: 05.04.2006 DE 102006015792
(43) Veröffentlichungstag der Anmeldung: 17.12.2008
(60) Teilanmeldung: 08022163.3
(73) Patentinhaber: Isra Surface Vision GmbH, 45699 Herten (DE)
(72) Erfinder: WIENAND, Stephan, 64673 Zwingenberg (DE); RUDERT, Armin, 45131 Essen (DE)
(74) Vertreter: KEIL & SCHAAFHAUSEN Patentanwälte
(86) Internationale Anmeldenummer: PCT/EP2007/001999
(87) Internationale Veröffentlichungsnummer: WO 2007/115621

(56) Entgegenhaltungen:
- WO-A-02/42715
- WO-A-2005/119172
- DE-A1- 10 345 586
- PETZ MARCUS ET AL: "Reflection grating photogrammetry: A technique for absolute shape measurement of specular free-form surfaces" PROC SPIE INT SOC OPT ENG; PROCEEDINGS OF SPIE - THE INTERNATIONAL SOCIETY FOR OPTICAL ENGINEERING; OPTICAL MANUFACTURING AND TESTING VI 2005, Bd. 5869, 2005, Seiten 1-12, XP002435034

## Beschreibung

Die Erfindung betrifft ein Verfahren zur Formmessung einer spiegelnden Oberfläche, bei dem mindestens ein Muster zur Reflexion an einer spiegelnden Oberfläche und mindestens eine Kamera zur pixelweisen Betrachtung des an der Oberfläche reflektierten Musters vorgesehen ist und die Position und Orientierung der Kamera und des Musters bekannt ist.

Derartige Verfahren, bei denen ein der Form und Lage nach bekanntes Muster in einer reflektierenden Oberfläche gespiegelt wird und das Spiegelbild mit einer Kamera betrachtet und ausgewertet wird, sind zur Formmessung von spiegelnden Oberflächen bekannt. So beschreibt bspw. die DE 197 57 106 A1 eine Vorrichtung zur automatisierten Messung der Form spiegelnder sphärischer oder auch asphärischer Flächen. Dazu wird der zu vermessenden Fläche ein beleuchtetes, diffus streuendes Muster gegenübergestellt, wobei das über die spiegelnde Fläche entstehende Bild des Musters von einer elektronischen Kamera festgehalten wird. Das Muster wird so gewählt, dass auf dem Bildsensor der Kamera ein Bild von annähernd geraden und äquidistanten Streifen entsteht, die sich mittels einer diskreten Fouriertransformation mit besonders hoher Genauigkeit auswerten lassen. Um die Oberfläche in beliebigen Raumrichtungen vermessen zu können, soll das auf dem Bildsensor entstehende Streifensystem zueinander orthogonale Streifen aufweisen.

Aus der DE 103 45 586 A1 sind ein Verfahren und eine Vorrichtung zum Bestimmen der Struktur einer Oberfläche bekannt, bei dem ein flächiges Muster von einem Bilderzeuger erzeugt und an der Oberfläche gespiegelt wird. Das gespiegelte Muster wird von einem Bildaufnehmer abgebildet und anschließend von einer Steuerung ausgewertet. Um ein einfaches, kostengünstiges sowie schnelles flächenhaftes Vermessen der Oberfläche des Objektes zu erreichen, werden aufeinanderfolgend mehrere flächige Muster mit flächigen Strukturen bildpunktweise von dem Bilderzeuger erzeugt, wobei die Strukturen zweier Muster voneinander verschiedene Abmessungen und die einzelnen Bildpunkte zweier Muster jeweils eine definierte Position aufweisen. Da bei diesem Verfahren feine Streifen eines Streifenmusters nicht mehr aufnehmbar sind, werden verhältnismäßig breite Streifen für das Streifenmuster verwendet, die einen sinusförmigen Helligkeitsverlauf aufweisen. Diese Muster werden auf TFT-Monitoren erzeugt.

Die DE 101 27 304 A1 beschreibt ein Verfahren und eine Vorrichtung zur Bestimmung einer dreidimensionalen Kontur einer spiegelnden Oberfläche eines Objekts, bei der eine Reflexion eines bekannten Rasters an der Oberfläche des Objekts mittels eines abbildenden Systems auf einem Empfänger abgebildet und das entstehende Bild ausgewertet wird. Hierzu wird vorgeschlagen, ein bekanntes Raster aus mindestens zwei unterschiedlichen Abständen von der spiegelnden Oberfläche einzusetzen, wobei die relative Lage der Raster und des Empfängers im Raum zueinander bekannt sein müssen.

Bei allen diesen Ansätzen wird davon ausgegangen, dass die Position und Orientierung des Messsystems durch ein geeignetes Kalibrierverfahren vorab festgestellt wurden und somit bekannt sind. Dies lässt sich für kleine zu vermessende Oberflächen auch realisieren. Sollen jedoch größere Flächen mit ausreichender Genauigkeit und der in modernen Produktionsprozessen geforderten Schnelligkeit gemessen werden, ist es in der Regel notwendig, mehrere Kameras zu benutzen, die sich vorzugsweise innerhalb des Musters befinden sollen. Um große Oberflächen zu vermessen, muss das sich in der spiegelnden Oberfläche reflektierende Muster eine ausreichende Größe aufweisen. Da das Muster zudem veränderbar sein muss, wird das Muster häufig in Form eines Bildes auf eine Mattscheibe projiziert. Hierfür wird jedoch bei großen Flächen viel Platz benötigt, der häufig nicht zur Verfügung steht. Ferner werden zur Erzeugung des Musters Flachbildschirme verwendet, wobei zur Erzeugung großflächiger Muster häufig mehrere Bildschirme eingesetzt werden, die in aufwendigen Kalibrierverfahren auf jede einzelne verwendete Kamera kalibriert werden müssen. Bei der Verwendung mehrerer Bildschirme und Kameras muss ferner eine Methode gefunden werden, wie der Übergang von einer zur nächsten Kamera bzw. zum nächsten Bildschirm realisiert werden kann.

M. Petz et al.: "Reflection Grating Photogrammetry: A Technique for Absolute Shape Measurement of Specular Free-Form Surfaces" in PROCEEDINGS OF SPIE-INTERNATIONAL SOCIETY FOR OPTICAL ENGINEERING, OPTICAL MANUFACTURING AND TESTING VI 2005, Band 5869, Seiten 1 bis 12, beschreibt verschiedene Ansätze, die Form einer spiegelnden Oberfläche mit Hilfe eines Referenzmusters zu bestimmen. Dazu gehört auch die Rekonstruktion einer solchen spiegelnden Oberfläche ausgehend vom Oberflächenwinkel, wozu die genaue Position eines Stützpunktes auf der spiegelnden Oberfläche bekannt sein muss. Die Position dieses Stützpunktes lässt sich mittels trigonometrischer Methoden bestimmen.

Bei der Verwendung nur eines Musters in einem bestimmten Abstand von der Oberfläche sowie lediglich einer Kamera kann die Form der spiegelnden Oberfläche mit den herkömmlichen Verfahren auch nicht endgültig bestimmt werden, weil sich eine Mehrdeutigkeit zwischen dem Oberflächenwinkel und dem Oberflächenabstand bzw. der Oberflächenhöhe ergibt, die ohne zusätzliche Informationen nicht aufgelöst werden kann. Dieses Problem wird mit den bekannten Verfahren (vgl. bspw. DE 101 27 304 A1) dadurch gelöst, dass mehrere Kameras verwendet oder mehrere Muster in verschiedenem Abstand von der Oberfläche angeordnet werden. Dies hat jedoch den Nachteil eines hohen Geräteaufwands, da jeder Bereich der zu vermessenden Oberfläche durch mehrere Muster und/oder Kameras abgedeckt werden muss.

Aufgabe der vorliegenden Erfindung ist es daher, eine Möglichkeit vorzuschlagen, bei der mit geringem Geräteaufwand eine zuverlässige Formmessung spiegelnder Oberflächen insbesondere auch transparenter Objekte ermöglicht wird, wobei die Formmessung besonders einfach handhabbar sein soll.

Die Lösung zu obiger Aufgabenstellung ist in Anspruch 1 angegeben. Insbesondere wird vorgeschlagen, dass zur Formmessung aus den pixelweise bekannten Blickrichtungen der Kamera und den der Abbildung des reflektierten Musters auf die Pixel der Kamera entsprechenden Positionen des Musters der Oberflächenwinkel und die Oberflächenhöhe bestimmt werden. Die spiegelnde Oberfläche ist im Rahmen dieser Erfindung nicht nur eine vollständig spiegelnde Oberfläche, sondern insbesondere auch eine teilweise transparente Oberfläche bspw. einer Glasscheibe. Daher ist die Erfindung insgesamt auch besonders geeignet für die Vermessung von Windschutzscheiben für Fahrzeuge. Indem vorzugsweise für jedes Pixel der Kamera die Blickrichtung bekannt ist, kann aus der Lage des auf diesem Pixel reflektierten Musterbereichs die entsprechende Musterposition mit hoher Ortsauflösung und einfachen optischen Mitteln bestimmt werden, so dass eine schnelle und genaue Vermessung der Oberfläche möglich wird. Außerdem kann die Oberflächenmessung auch dann noch vorgenommen werden, wenn sich die Kamera im Brennpunkt sphärisch gekrümmter Oberflächen befindet.

Die Blickrichtung eines jeden Pixels der Kamera kann dabei insbesondere aus einer vorhergehenden oder nachfolgenden Kalibrierung eines Systems zur Formmessung bekannt sein.

Gemäß einer bevorzugten Ausführung des vorgeschlagenen Verfahrens wird zur Analyse des von der Kamera aufgenommenen Musters , welches bspw. eine Mustersequenz von mindestens zwei unterscheidbaren, periodisch auftretenden Musterbestandteilen aufweist, ein phasenauswertendes Verfahren, ein zeitlich kodiertes Verfahren und/oder ein frequenzkodiertes Verfahren verwendet. Vorzugsweise kann die Mustersequenz zwei verschiedene Lichtintensitäten aufweisen. Es hat sich herausgestellt, dass durch dieses Verfahren eine besonders hohe Ortsauflösung erreicht werden kann. Daher eignet es sich auch hervorragend, um die Position des in dem Pixel abgebildeten Musterpunktes im Muster zu bestimmen. Ein zeitlich kodiertes und/oder frequenzkodiertes Verfahren kann bspw. derart aussehen, dass verschiedene Muster zeitlich nacheinander und/oder für eine verschiedene Zeitdauer auf den Musterträgern dargestellt und von den Kameras aufgenommen werden. In einer nachfolgenden Auswertung kann, weil die Art der Muster bekannt ist, durch eine im Wesentlichen kombinatorische Auswertung ermittelt werden, welches Kamerapixel auf welchen Musterbereich schaut. Der simpelste Ansatz läge darin, jedes Monitorpixel eines als Bildschirm ausgebildeten Musterträgers einzeln anzusteuern und dem jeweiligen Kamerapixel zuzuordnen. Durch eine geschickte Musterauswahl und zeitliche Abfolge verschiedener Muster kann diese Bestimmung jedoch beschleunigt und/oder verfeinert werden. Eine weitere Möglichkeit liegt in einem phasenauswertenden Verfahren, in dem das Muster bspw. einen bestimmten Helligkeitsverlauf aufweist. Durch Verschieben des Musters kann dann mittels einer Phasenanalyse eine genaue Lokalisierung des Musterpunkts erfolgen. Dazu wird das Muster vorzugsweise mindestens dreifach verschoben. Es ist auch eine Kombination dieser beiden Verfahren denkbar.

Gemäß einer bevorzugten Realisierung des vorgeschlagenen Verfahrens wird für mindestens einen Stützpunkt auf der reflektierenden bzw. spiegelnden Oberfläche die Oberflächenhöhe genau bestimmt. Anschließend können ausgehend davon die Oberflächenhöhe in einem dem Stützpunkt benachbarten Punkt abgeschätzt und daraus dessen Oberflächenwinkel bestimmt werden. Da die Winkelbestimmung bei den in der Praxis vorkommenden Systemabmessungen, d.h. nicht zu kleinen Messabständen, nicht sehr empfindlich gegenüber Höhenungenauigkeiten ist, lässt sich auf diese Weise der Oberflächenwinkel sehr genau bestimmen. Dieser Oberflächenwinkel an den Stützpunkten und den den Stützpunkten benachbarten Punkten kann dann zur gesuchten Oberflächenform aufintegriert werden. Hierbei werden unter benachbarten Punkten nicht nur die unmittelbar an den Stützpunkt angrenzenden Bereiche der Oberfläche, sondern auch weiter entfernt liegende Punkte verstanden, die jeweils an Oberflächenpunkte angrenzen, für die die Oberflächenhöhe und/oder der Oberflächenwinkel bereits bestimmt oder abgeschätzt wurde. Prinzipiell ist es dann möglich, ausgehend von nur einem bspw. etwa in der Mitte der zu untersuchenden Oberfläche liegenden Stützpunkt die gesamte Oberflächenstruktur bzw. -form zu ermitteln. Zur Genauigkeitsverbesserung können ferner im Prinzip bekannte Methoden zur Krümmungskorrektur eingesetzt werden.

Zur Bestimmung der Oberflächenhöhe ist es erfindungsgemäß vorgesehen, wenn ein linienförmiges Objekt verwendet wird, welches vor dem Muster und vorzugsweise nicht senkrecht zur spiegelnden Oberfläche angeordnet ist. Aus der bekannten Blickrichtung des den Oberflächenpunkt abbildenden Pixels der Kamera (in der Raumrichtung bekannte Gerade) und dem von dem linienförmigen Objekt verdeckten Musterpunkt werden eine Ebene bestimmt und der Schnittpunkt des Objektes mit dieser Ebene ermittelt. Durch den Schnittpunkt des Objektes mit der Ebene und dem verdeckten Musterpunkt kann auch die von dem Musterpunkt ausgehende und zu dem Oberflächenpunkt auf der spiegelnden Oberfläche verlaufende Gerade ermittelt werden. Der Schnittpunkt beider Geraden bestimmt dann mit hoher Genauigkeit die gesuchte Oberflächenhöhe. Als Objekt eigenen sich insbesondere mathematisch leicht beschreibbare Formen wie Geraden oder Kreise. In der Praxis können diese durch dünne Stäbchen oder bspw. vor dem Muster gespannte Fäden realisiert werden.

Auch wenn es grundsätzlich möglich ist, ausgehend von einem Stützpunkt die gesamte Form zu vermessen, kann die Genauigkeit der Formmessung erfindungsgemäß dadurch erhöht werden, dass mehrere Stützpunkte in einem vorzugsweise dichten Raster über die zu vermessende Oberfläche gelegt werden, wobei dann ausgehend von jedem Stützpunkt die Form der Oberfläche ermittelt wird. Auf diese Weise wird nur bis zu einem bestimmten Abstand um einen Stützpunkt herum die Oberflächenform aufgrund der ermittelten Oberflächenhöhe in dem Stützpunkt abgeschätzt, so dass sich Fehler aus der Bestimmung der genauen Position bzw. Höhe des Stützpunktes nicht über Gebühr bemerkbar machen. Da aus den um jeden Stützpunkt herum ermittelten Oberflächenformen eine gesamte Oberfläche zusammengesetzt werden muss, ergeben sich zusätzliche Randbedingungen, welche die Genauigkeit der Formmessung insgesamt erhöhen. Außerdem kann die Berechnung um jeden Stützpunkt herum parallel erfolgen, so dass das Verfahren besonders schnell durchführbar ist.

Zur weiteren Erhöhung der Genauigkeit ist es erfindungsgemäß möglich, dass das Muster, welches insbesondere auf Monitoren darstellbar ist, beginnend bei einem groben Muster sukzessive insbesondere bis zur Auflösungsgrenze der Monitore verfeinert wird. Als Muster kommt bspw. ein Streifenraster in Betracht, wobei die Streifenform jedoch nahezu beliebig und anwendungsspezifisch ausgewählt werden kann. Sinnvolle Musterformen können Rechtecke, verschliffene Rechtecke, Trapez- oder Sinus-Verläufe sein. Um jede Raumrichtung des Musters vermessen zu können, werden die Muster bzw. Streifenraster in zwei verschiedenen, nicht parallelen Raumrichtungen erzeugt und von der zu vermessenden Oberfläche reflektiert. Bevorzugt ist eine orthogonale Anordnung der Muster, d.h. eine Drehung der Muster um 90° in der Projektion.

Ferner wird erfindungsgemäß vorgeschlagen, während einer Messung verschiedene Musterstrukturen zu erzeugen, die insbesondere abhängig von den zu vermessenden Form und der Feinheit des gerade anzuwendenden Musters ausgewählt werden können.

Das erfindungsgemäße Verfahren zur Formmessung kann insbesondere bei transparenten Gegenständen angewendet werden. Ein typisches Anwendungsbeispiel hierfür sind Windschutzscheiben von Kraftfahrzeugen oder andere gewölbte Scheiben. In diesem Fall kann besonders bevorzugt, gleichzeitig die Form mehrerer reflektierender Oberflächen gemessen werden, bspw. die Ober- und Unterseite einer Glasscheibe und/oder mehrere übereinander angeordnete Glasscheiben bzw. sonstige transparente Objekte. Insbesondere bei der Messung transparenter Objekte ist es sinnvoll, je nach Feinheit des reflektierten Musters die Musterstrukturen derart anzupassen, dass die Musterstrukturen von den verschiedenen Oberflächen noch aufgelöst werden können. Hierzu kann bspw. von einem Streifenmuster zu einem Punktmuster gewechselt werden.

Eine erhebliche Verbesserung bei der Vermessung mehrerer Oberflächen kann dadurch erreicht werden, dass in einem ersten Verfahrensschritt die obenliegende Oberfläche insbesondere nur bis zu einer Genauigkeit bestimmt wird, bis zu der die Mehrfachreflexionen noch keine Rolle spielen. Alternativ oder ggf. zusätzlich können diejenigen Bereiche der Oberfläche vermessen werden, in denen Mehrfachreflexionen der verschiedenen Oberflächen noch getrennt bzw. aufgelöst werden können. Auf Basis dieser Messung ist dann die Oberflächenform in etwa bekannt und es kann somit berechnet werden, wie sich das bekannte Muster in Mehrfachreflexionen darstellt, so dass in einem zweiten Verfahrensschritt die Mehrfachreflexionen ausgewertet werden können. Sofern die Form und Position der zu vermessenden Oberflächen in etwa bekannt sind, können statt einer groben Vermessung der Oberflächenform in dem ersten Verfahrenschritt auch die bekannten Werte verwendet werden. In Anhängigkeit von der konkret vorliegenden Musterform kann das Muster insbesondere immer weiter verfeinert und die Oberflächenform ggf. iterativ sehr genau bestimmt werden. Dabei kann in Abhängigkeit von der (vorläufig) ermittelten oder vorbekannten Oberflächenform die Art des Musters bei der Verfeinerung der Musterstruktur entsprechend angepasst werden. Dies gilt auch für den Fall, wenn lediglich eine Oberfläche vermessen wird, da die geeignete Struktur des Musters insbesondere auch von der Oberflächenform abhängt.

Schließlich wird ein System zur Formmessung einer spiegelnden Oberfläche mit mindestens einem Musterträger zur Erzeugung eines Musters, welches auf der spiegelnden Oberfläche reflektierbar ist, mindestens einer Kamera zur pixelweisen Betrachtung des auf der Oberfläche reflektierten Musters und einer Auswerteeinheit zur Auswertung der Kamerabilder und zur Formbestimmung und/oder Kalibrierung dargestellt. Es ist vorgesehen, dass das System eine Einrichtung zur Anordnung einer großflächigen, planen Spiegeloberfläche aufweist, wobei die Spiegeloberfläche vorzugsweise durch eine Flüssigkeit gebildet wird.

Als Einrichtung zur Anordnung einer planen Spiegeloberfläche eignet sich insbesondere eine Wanne, in die die Flüssigkeit eingefüllt werden kann. Durch verschieden hohe Füllstände in der Wanne ist es auf einfache Weise möglich, mehrere parallele Spiegeloberflächen zu auszubilden und die Höhe der Spiegeloberflächen in etwa an die Position der zu vermessenden Objekte anzupassen. Ferner kann insbesondere auch alternativ die Wanne angehoben bzw. abgesenkt werden.

Der Musterträger kann ein Monitor, insbesondere ein TFT-Monitor sein, auf dem verschiedene Muster darstellbar sind.

Ferner können mehrere Musterträger in einem Viereck angeordnet sein, wobei vorzugsweise in jedem Kreuzungspunkt der Musterträger je eine Kamera angeordnet ist. Natürlich ist es auch möglich, die Monitore abgewinkelt und sogar senkrecht zueinander anzuordnen. Die optimale Anordnung der Monitore ergibt sich insbesondere aus der zu vermessenden Oberflächenform, deren optimaler Verlauf häufig bekannt ist, so dass die Anordnung der Monitore diesbezüglich optimiert werden kann.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbezügen.

Es zeigen:
- Fig. 1: ein System zur Formmessung einer spiegelnden Oberfläche gemäß einer ersten Ausführungsform;
- Fig. 2: ein System zur Formmessung einer spiegelnden Oberfläche gemäß einer zweiten Ausführungsform;
- Fig.3: die Musterträger und Kameras eines Systems zur Formmessung einer spiegelnden Oberfläche gemäß einer dritten Ausführungsform;
- Fig. 4: den Strahlengang für ein Kamerapixel während der Kalibrierung eines Systems;
- Fig. 5: für die Auswertung der bei der Kalibrierung verwendeten Dreiecke im Strahlengang gemäß Fig. 4;
- Fig. 6: das System gemäß Fig. 1 während einer Formmessung, die nicht das erfindungsgemäße Verfahren verwendet, und
- Fig. 7: das System gemäß Fig. 1 während der Formmessung nach dem erfindungsgemäßen Verfahren.

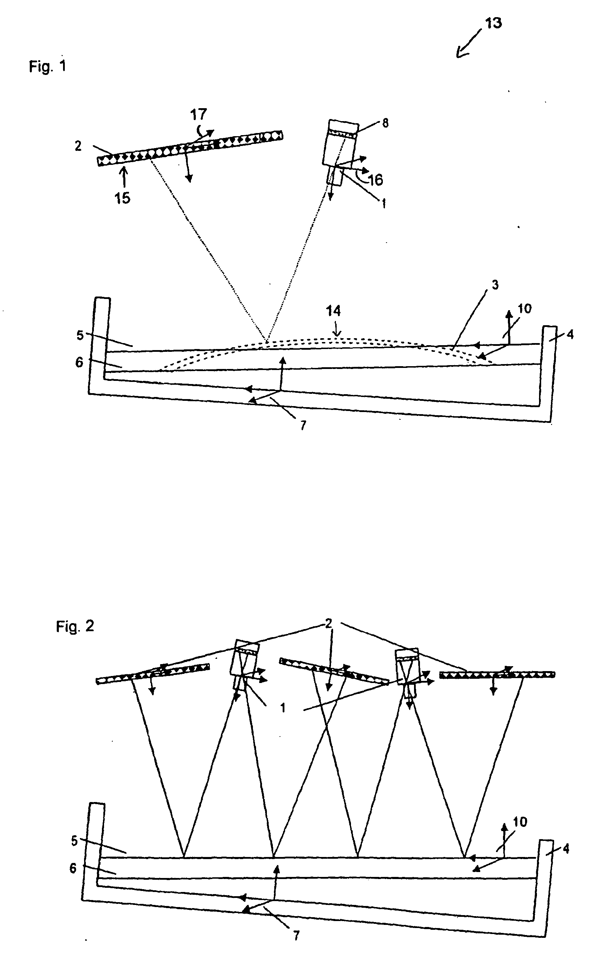

In Fig. 1 ist der grundsätzliche Aufbau eines Systems 13 zur Formmessung einer spiegelnden Oberfläche 14 eines zu vermessenden Objekts 3 dargestellt. Das System 13 weist eine Kamera 1 auf, welche über die spiegelnde Oberfläche 14 das Muster 15 eines Musterträgers 2 betrachtet. Um die Form der spiegelnden Oberfläche 14 des Objekts 3 bestimmen zu können, muss die Beziehung zwischen der Kamera 1 und dem Muster 15 des Musterträgers 2 bekannt sein. Hierzu werden das Koordinatensystem 16 der Kamera 1 und das Koordinatensystem 17 des Musters 15 in einer Kalibrierung bestimmt. Zusätzlich können sowohl die Kamera 1 als auch das Muster 15 in ein weltfestes Koordinatensystem 7 einkalibriert werden. Dies ist jedoch nicht unbedingt notwendig, verbessert jedoch die Übersichtlichkeit des Gesamtsystems. Anstelle des weltfesten Koordinatensystem 7 können auch das Koordinatensystem 16 der Kamera 1 oder das Koordinatensystem 17 des Musters 15 als weltfestes Koordinatensystem benutzt werden. Damit sind die Positionen und Orientierungen sowohl der Kamera 1 als auch des Musters 15 in dem System 13 bekannt.

Die Kamera 1 ist zur pixelweisen Betrachtung des auf der reflektierenden Oberfläche 14 reflektierten Musters 15 eingerichtet. In der Beschreibung des Systems 13 wird die Kamera 1 zunächst als einfache Lochkamera modelliert, für die keine internen Kameraparameter wie die theoretische Bildweite, Verzerrung, Hauptpunktverschiebung oder dgl. benötigt werden. Diese können jedoch, soweit sie bekannt sind, zur schnelleren Konvergenz des Verfahrens genutzt werden, indem die Kamera 1 als korrigierte Lochkamera modelliert wird, so dass dann mit Hilfe der bekannten Kameraparameter das von der Kamera 1 aufgenommene Bild 8 in ein mit den bekannten Parametern korrigiertes Bild umgerechnet wird. Dieses Bild wird im weiteren Verfahren jedoch wieder so behandelt, als wenn es von einer einfachen Lochkamera aufgenommen wäre.

Wenn eine Kamera direkt schräg auf ein beliebiges Muster schaut, ist es möglich, alleine durch Auswertung des Bildes eine räumliche Beziehung zwischen dem ebenen, bekannten Muster und der Kamera herzustellen. Hierbei ist es vorteilhaft, wenn ein Muster 15 zur Kalibrierung verwendet wird, das sich in exakt der gleichen Lage wie das später zur Formmessung benutzte Muster 15 befindet, weil die genaue Beziehung zwischen dem Muster 15 und der Kamera 1 für die Auswertung der Formmessung benötigt wird. Die Ausprägung des Musters 15 kann verschieden sein. Dazu ist als Musterträger 2 ein Flachbildschirm, bspw. ein TFT-Bildschirm, vorgesehen, auf dem beliebige Muster 15 darstellbar sind. Aufgrund der bekannten Pixelmaße des Flachbildschirms 2 ist damit auch die Geometrie des dargestellten Musters 15 genau bekannt. Es sind jedoch auch andere Realisierungen für einen Musterträger 2, bspw. austauschbare Platten mit einem vermessenen Muster in einem Halter, denkbar.

Wie aus Fig. 1 ersichtlich, kann die Kamera das Muster 15 auf dem Musterträger 2 jedoch nicht sehen, wenn sich kein spiegelndes Messobjekt 3 in dem Messvolumen befindet. Sofern die Kamera 1 und der Musterträger 2 in ihrer bei der späteren Formmessung verwendeten Anordnung kalibriert werden sollen, muss also ein in der Form genau bekanntes Objekt mit spiegelnden Eigenschaften in zu dem Messobjekt 3 vergleichbarer Position angeordnet werden. Vorzugsweise sollte es sich um eine exakt ebene, spiegelnde Oberfläche handeln, weil sich dann für die Kalibrierung einfache mathematische Beziehungen ergeben.

Da durch die nicht bekannte Lage dieses ebenen Spiegels zusätzliche Freiheitsgrade in das zu lösende Gleichungssystem eingebracht werden, muss das zur Kalibrierung verwendete Muster 15 über mindestens zwei Spiegel in verschiedener Lage betrachtet werden. Die einfachste Lösung hierzu ist die Anordnung zweier exakt paralleler Spiegel in verschiedenen Höhen, die nacheinander betrachtet werden, wobei die Höhe der Spiegel selbst nicht bekannt sein muss. Diese beiden Spiegeloberflächen 5, 6 sind in Fig. 1 durch durchgezogene Striche dargestellt.

In der Praxis handelt es sich bei den zu vermessenden Objekten 3 bspw. um Windschutzscheiben von Kraftfahrzeugen. Bei diesen Abmessungen von Objekten 3 ist die Herstellung und Anordnung der großflächigen Spiegeloberflächen 5, 6 nicht ganz einfach, weil es sehr teuer ist, Spiegel von ausreichender Ebenheit in entsprechend großen Abmessungen herzustellen und diese verbiegungsfrei in zwei verschiedenen Höhen zu lagern. Zur Erzeugung der beiden parallelen Spiegeloberflächen 5, 6 ist der untere Teil der Anlage 13 daher als Wanne 4 ausgebildet. In diese Wanne 4 wird eine Flüssigkeit mit ausreichender Zähigkeit eingegossen, die eine gut spiegelnde Oberfläche aufweist. Die beiden Höhen werden dadurch realisiert, dass nacheinander zwei verschiedene Flüssigkeitsmengen in die Wanne 4 eingefüllt werden. Diese Anordnung hat den Vorteil, dass die beiden Spiegeloberflächen 5, 6 ideal eben und parallel angeordnet sind. Außerdem kann die Orientierung dieser Spiegeloberflächen jederzeit reproduziert werden, was für die Durchführung der Formmessung nicht unbedingt erforderlich ist, jedoch die Handhabung des Messsystems z.B. bei Austausch einer defekten Kamera und der dann erforderlichen Nachkalibrierung erleichtert. Eine geeignete Flüssigkeit mit ausreichender Zähigkeit ist Glycerin.

In Fig. 2 ist ein vergleichbares System 13 dargestellt wird, welches jedoch mehrere (drei) Musterträger 2 und mehrere (zwei) Kameras 1 aufweist, die nebeneinander angeordnet sind und insgesamt einen großen Objektbereich abdecken, in dem die Oberfläche eines Objekts vermessen werden kann. Durch das Vorsehen der mit Glycerin gefüllten Wanne 4 zur Erzeugung der Spiegeloberflächen 5, 6 ist es auf einfache Weise möglich, alle Muster 15 der Musterträger 2 und alle Kameras 1 gleichzeitig in ein gemeinsames Koordinatensystem 10 zu kalibrieren, da die Spiegeloberflächen 5, 6 der Flüssigkeit einfach in beliebiger Größe hergestellt werden können.

Dabei definiert die Flüssigkeitsoberfläche 5, 6 vorzugsweise die x-y-Ebene eines gemeinsamen Koordinatensystems für alle Kameras 1 und Musterträger 2. Wenn darüber hinaus die Kameras 1 und die Muster 15 bzw. die Musterträger 2 derart angeordnet sind, dass jede Kamera 1 mindestens mit einer anderen Kamera 1 gemeinsam ein Muster 15 auf demselben Musterträger 2 sieht, kann darüber hinaus der Bezug zwischen allen Komponenten in der Rotation um die Flächennormale der Spiegeloberfläche 5, 6 und die Verschiebung auf dieser Fläche gegeneinander bestimmt werden. Dabei ist es nicht unbedingt notwendig, dass jede der beiden Kameras 1 auf einem Musterträger 2 denselben Musterbereich 15 abbildet, da wegen der bekannten Geometrie des Gesamtmusters 15 auf dem Musterträger 2 der Bezug zwischen zwei unterschiedlichen Musterbereichen 15 hergestellt werden kann. Als Nullpunkt des Koordinatensystems 10 kann ein beliebiger Punkt auf der Fläche gewählt werden. Gleiches gilt für den Nullpunkt der Rotation um die Flächennormale. So können alle Komponenten gemeinsam in ein Koordinatensystem 10 kalibriert werden.

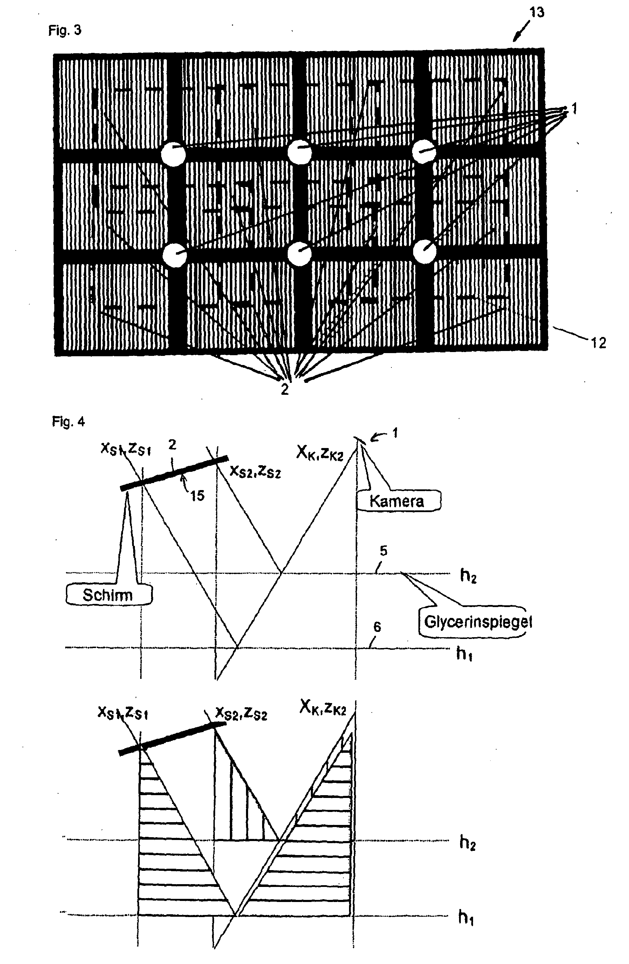

Eine besonders zweckmäßige Anordnung für ein erfindungsgemäßes System 13 ist in Fig. 3 dargestellt, in dem n x m Musterträger matrixartig in einem Viereck angeordnet sind. In jedem Kreuzungspunkt der Musterträger 2 befindet sich eine Kamera 1, so dass jede Kamera 1 vier Musterträger 2 sieht und - abgesehen von den Musterträgern 2 am Rand der Matrix - alle Musterträger 2 von vier Kameras 1 gesehen werden. Die entsprechenden Bildbereiche 12 der Kameras 1 sind gestrichelt dargestellt.

Auch wenn es zur Messung der Form eines Objekts 3 nicht notwendig ist, ein reproduzierbares Koordinatensystem festzulegen, weil die Form des Objekts bezüglich Koordinatentransformationen zwischen verschiedenen Bezugskoordinatensystemen natürlich invariant ist, ist es in einigen Fällen wünschenswert, einen Bezug zu einem fest vorgegebenen Koordinatensystem herzustellen. Dies kann bspw. die Handhabung des gesamten Messsystems 13 erleichtern.

Die Orientierung der X-Y-Ebene in dem Koordinatensystem 10 ist durch den Flüssigkeitsspiegel immer gleich. Für die anderen Freiheitsgrade können von der Kamera 1 erkennbare Marken angebracht werden. So kann man bspw. auf einem Musterträger 2 einen Nullpunkt definieren und diesen so kennzeichnen, dass er von mindestens einer Kamera 1 erkannt werden kann. Durch Festlegung eines zweiten Fixpunktes kann auch der Nullpunkt der Rotation um die Flächennormale festgelegt werden. Bei Verwendung von Flachbildschirmen als Musterträger 2 kann diese Kennzeichnung auch auf dem Bildschirm angezeigt werden.

Als gemeinsames Koordinatensystem 10 kann daher zunächst das Koordinatensystem verwendet werden, dessen X-Y-Ebene mit der Spiegeloberfläche 5, 6 zusammenfällt. Ausgehend von diesem Koordinatensystem 10 kann dann eine Beziehung zu einem beliebigen weltfesten Koordinatensystem 7 hergestellt werden, das bspw. mit der Wanne 4 in Verbindung steht.

Mit Bezug auf Fig. 4 wird nachfolgend die Einrichtung des System 13 anhand eines auf einem Flachbildschirm 2 abgebildeten Musters 15 detailliert beschrieben. Dabei wird für jedes Pixel der Kamera 1 des Systems 13 das Pixel des Flachbildschirms 2 ermittelt, auf den die Kamera 1 bzw. das jeweilige Kamerapixel blickt. Diese Messung ist zunächst unabhängig von der Kalibrierung und legt die Blickrichtung der Kamera 1 für jedes Pixel fest.

Dabei werden als Parameter die Positionen der Kamera xₖ, yₖ und zₖ im Bezugskoordinatensystem. Der durch die Koordinaten xₖ, yₖ und zₖ festgelegte Punkt bezeichnet den Punkt, in dem sich alle Strahlen, die in die Kamera gelangen, im Objektiv treffen. Ferner werden als weitere Parameter die Positionen jedes Pixels des Flachbildschirms 2 im Bezugskoordinatensystem sowie die Blickrichtung jedes Pixels der Kamera 1 inklusive der (mitgemessenen) Objektivverzerrung im Bezugskoordinatensystem bestimmt.

Unter der Anordnung des Systems 13 aus Kameras 1 und Flachbildschirmen 2 (TFT-Monitoren) wird eine mit Glycerin gefüllte Wanne 4 gestellt, die in verschiedenen Höhen angebracht werden kann. Diese Wanne 4 ist auf der Innenseite geschwärzt. Sobald das in der Wanne befindliche Glycerin zur Ruhe kommt, stellt sich eine optisch einwandfreie und ebene spiegelnde Oberfläche 5, 6 ein. Dann werden für zwei Höhen (h₁, h₂) jedem Pixel der Kamera 1 das entsprechende Pixel des Flachbildschirms 2 zugeordnet, auf den der Strahl des betreffenden Kamerapixels durch den Spiegel 5, 6 reflektiert wurde. Die Größen h₁ und h₂ sind die beiden Höhen, in denen der Glycerinspiegel (Spiegeloberfläche 5, 6) vermessen wurde.

Die Messung erfolgt dadurch, dass auf dem Flachbildschirm 2 nacheinander geeignete Muster 15 angezeigt und deren Spiegelbilder 8 von der Kamera 1 aufgenommen werden. Durch eine geeignete Auswahl der Muster 15 kann nach einer bestimmten Anzahl von Bildern 8 jedes einzelne Bildschirmpixel identifiziert werden. Hierzu kann man jedes Pixel in seiner Helligkeitsfolge kodieren (bspw. als Grey-Code) oder man benutzt einen geeigneten Grauwertverlauf oder eine Folge von Grauwertverläufen.

Nachfolgend wird ein Beispiel für eine geeignete Parametrierung angegeben, die jedoch variiert werden kann, ohne den Gegenstand der vorliegenden Erfindung zu verlassen. Der Koordinatenursprung wird mit dem Pixel (0,0) eines beliebigen Flachbildschirms 2 verbunden. Durch die Auswahl der Raumkoordinate dieses Pixels ist die Position des Koordinatensystems festgelegt. Die Spiegeloberfläche 5, 6 des Flüssigkeitsspiegels wird parallel zur X-Y Ebene des Koordinatensystems 10 gewählt, so dass die Z-Richtung des Koordinatensystems 10 senkrecht auf der Spiegeloberfläche 5, 6 steht. Die X-Achse des Koordinatensystems verläuft senkrecht zu der langen Seite des Flachbildschirms 2, der den Ursprung definiert.

Durch diese Auswahl wird ein eindeutiges Koordinatensystem 10 vorgegeben, in dem alle Systemkomponenten vermessen werden können.

Produktionsbedingt ist der Abstand zweier Pixel auf einem Flachbildschirm 2 hochgenau bekannt. Für einen 17"-Monitor beträgt dieser Abstand bspw. 0,264 mm. Sofern die Lage eines Monitorpixels im Raum und die drei Raumwinkel, in denen der Monitor im Raum angeordnet ist, bekannt sind, kann für jedes Monitorpixel die Position im Raum genau bestimmt werden. Diese Metrik ist in allen Flachbildschirmen 2 exakt gleich und garantiert somit, dass die dreidimensionalen Weltkoordinaten ebenfalls metrisch sind.

In Fig. 4 ist nun der Strahlengang für ein einziges Pixel einer Kamera 1 dargestellt. Dabei sind die Koordinaten xₖ, yₖ und zₖ die Positionen der Kamera, h₁ und h₂ die Höhen der Spiegeloberflächen 5, 6 sowie xₛ₁, yₛ₁ und zₛ₁ die Raumkoordinaten, auf die ein Kamerapixel bei Reflexion in der Höhe h₁ gespiegelt wird. Dabei sind die in dem unteren Teil von Fig. 4 in unterschiedlichen Graustufen dargestellten Dreiecke in mathematischem Sinne ähnlich.

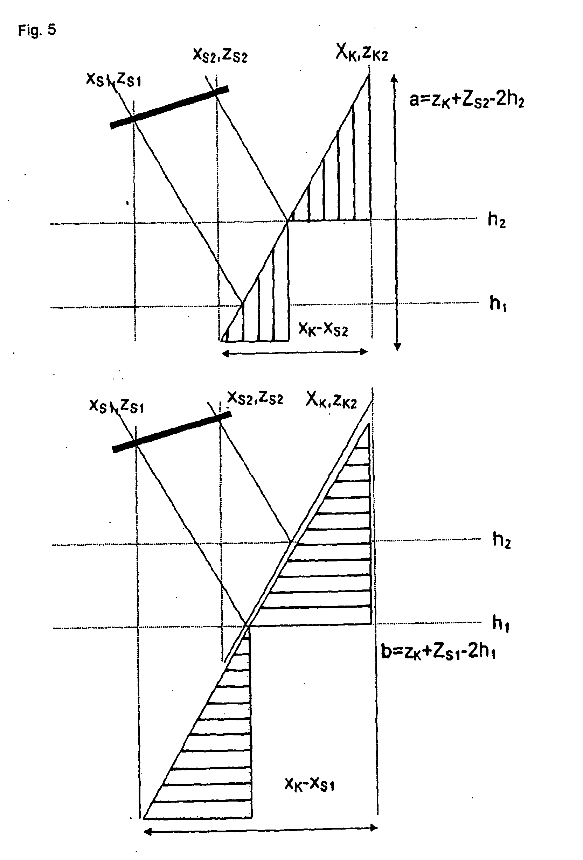

Entsprechend der Darstellung in Fig. 5 lassen sich die beiden kleinen und beiden großen Dreiecke zu je einem Dreieck zusammenfassen. Die Höhe und Breite dieser beiden Dreiecke ist dann bekannt. Aufgrund der Ähnlichkeit der Dreiecke gilt die folgende Beziehung:

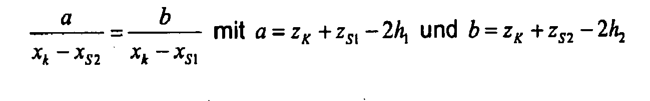

Mit diesem Zusammenhang kann ein Parameter in der Gleichung berechnet werden. Nach xₖ aufgelöst lautet diese Gleichung:

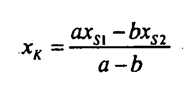

Die Rechnung für yₖ ergibt sich in analoger Weise durch Tauschen der Koordinatenrichtungen X und Y.

Diese Gleichung wird für jedes Pixel der Kamera 1 aufgestellt. Die Bedingung für die Lösung des Gleichungssystems ist, dass sich alle Strahlen von Pixeln, die zu einer bestimmten Kamera 1 gehören, in einem Punkt schneiden. Das daraus entstehende Gleichungssystem wird durch einen geeigneten, bekannten Optimierungsalgorithmus, bspw. Newton-Gauss-Jordan, gelöst. Zur Vereinfachung der Optimierung können auch nur einige ausgewählte Pixel verwendet werden.

Als vorteilhafte Startwerte für die Optimierung können geeignete Werte benutzt werden. So kann die Position aller Flachbildschirme 2 als Position des Pixels 0,0 grob vermessen und als Startwert verwendet werden. Gleiches gilt für die drei Raumwinkel jedes Monitors. Ferner werden die Höhen jeder Kamera Z sowie der Spiegelflächen 5, 6 h₁ und h₂ grob vermessen und als Startwert verwendet.

Für jeden Flachbildschirm 2 werden dann die X, Y und Z-Koordinate des Pixels (0,0) sowie die drei Raumwinkel seiner Lage optimiert. Entsprechendes gilt für die Höhen h₁ und h₂ der Spiegeloberflächen 5, 6 sowie der Höhe der Kameraposition Z. Als Ergebnis der Optimierung erhält man die korrekte Position und Lage jedes Flachbildschirms 2 sowie jeder Kamera 1. Zusätzlich ist für jedes Pixel, das mindestens für eine Höhe eine gültige Messung durchgeführt hat, der Punkt bekannt, auf den die Kamera in der Ebene z=0 blickt. Für die Reflexionen in den Höhen h₁ und h₂ ergibt sich folgende Beziehung

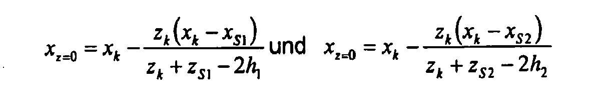

Diese Gleichungen ergeben sich aus der Betrachtung der Dreiecke gemäß Fig. 5.

Da diese Rechnung für jedes Kamerapixel separat durchgeführt wird, ist nach der Kalibrierung für jedes Pixel der Kamera 1 die Blickrichtung im Raum bekannt, und zwar einschließlich der Objektivverzerrung, weil diese bei der Bildaufnahme ebenfalls berücksichtigt bzw. mitgemessen wurde. Anstelle der Modellierung der Kamera mit Verzerrungsmodellen wird bei dieser Vorgehensweise also für jedes Pixel explizit eine Blickrichtung bestimmt.

Grundsätzlich könnte auch ein Verzerrungsmodell mit modelliert werden. Hierdurch ändert sich das zu optimierende Gleichungssystem dahingehend, dass diese Parameter zusätzlich auftauchen und optimiert werden, was einen erhöhten Rechenaufwand bedeutet.

Weiterhin könnte für jede Spiegelhöhe eine im Prinzip bekannte Kalibrierung auf ein ebenes Muster durchgeführt werden, ohne die Tatsache zu berücksichtigen, dass die Kamera 1 in Wirklichkeit auf einen Spiegel des Musters 15 schaut. Dann ergibt sich für jede Spiegelhöhe h₁ und h₂ eine andere, virtuelle Kameraposition. Da jedoch bekannt ist, dass es sich in Wirklichkeit immer um dieselbe Kameraposition handelt und nur die Spiegelhöhen (bei exakt parallelen Spiegeloberflächen 5, 6) verschieden waren, kann ein Gleichungssystem aufgestellt werden, das diese Randbedingung nutzt. Durch Optimierung des Gleichungssystems erhält man dann die richtige Position der Kamera 1.

Diese Methode hat den Vorteil, dass die Kalibrierung in zwei Schritte zerlegt werden kann und für den ersten Schritt bekannte Standardmethoden benutzt werden können. Sie hat jedoch den Nachteil, dass man für den ersten Schritt nur das Muster 15 auf einem Musterträger 2 nutzen kann. Bei Anordnung mit mehreren Kameras 1 deckt ein Musterträger 2 in der Praxis aber nur einen Teil des Bildfeldes ab, und dies auch noch einseitig, d.h. nur auf einer Seite des Bildfeldes. Eine gute Kalibrierung lässt sich jedoch nur durchführen, wenn das Bildfeld einigermaßen gleichmäßig mit Musterpunkten belegt ist.

Sobald die Kalibrierung des Systems 13 wie vorbeschrieben durchgeführt wurde, kann die Formmessung der spiegelnden Oberfläche 14 des Objekts 3 vorgenommen werden. Dazu werden verschiedene Flachbildschirme 2 ggf. zunächst nacheinander oder gleichzeitig mit verschiedenen Helligkeiten eingeschaltet, um zu erkennen, auf welchen Flachbildschirm 2 eine Kamera 1 blickt. Dann wird ein grobes Streifenraster auf dem Flachbildschirm 2 erzeugt, um die Position in dem Muster 15, wohin die Kamera 1, blickt, weiter einzugrenzen. Das Streifenmuster 15 wird bis zur Auflösungsgrenze der Flachbildschirme 2 verfeinert und jeweils entsprechend auf die Pixel der Kamera 1 abgebildet.

Um die reflektierende Oberfläche 14 in allen Richtungen vermessen zu können, wird das Streifenmuster 15 auch um 90° gedreht auf den Flachbildschirmen 2 dargestellt und auch in dieser Richtung die vorbeschriebene Verfeinerung des Musters 15 vorgenommen. Da bei dem beschriebenen Aufbau grundsätzlich nicht jeder Bereich der spiegelnden Oberfläche 14 durch zwei Muster 15 und/oder zwei Kameras 1 abgedeckt wird, entsteht eine Mehrdeutigkeit in dem Oberflächenwinkel und/oder dem Oberflächenabstand.

Um diese Mehrdeutigkeit aufzulösen, benötigt man mindestens einen Start- bzw. Stützpunkt, in dem eine der beiden Größen (Oberflächenwinkel oder Oberflächenhöhe) bekannt ist. An diesem können dann Höhe und Winkel eindeutig bestimmt werden. Ausgehend von diesem Stützpunkt wird nachfolgend die Höhe in Nachbarpunkten geschätzt und daraus der Winkel bestimmt. Die Winkelbestimmung ist bei in der Praxis vorkommenden Systemabmessungen und nicht zu kleinen Messabständen nicht sehr empfindlich gegenüber Höhenungenauigkeiten. Deshalb lässt sich auf diese Weise der Oberflächenwinkel in einem Oberflächenpunkt sehr genau bestimmen. Die Oberflächenwinkel in den Oberflächenpunkten können dann zur Gesamtform aufintegriert werden. Dabei können zur Genauigkeitsverbesserung auch im Prinzip bekannte Methoden zur Krümmungskorrektur verwendet werden.

Da es bei der Bestimmung eines Start- bzw. Stützpunktes in der Regel einfacher ist, eine Höhe festzulegen, können zur Auflösung der Mehrdeutigkeit von Oberflächenwinkel und Oberflächenhöhe folgende Verfahren angewendet werden:

Sofern das Gesamtsystem 13 im Koordinatensystem vermessen ist, ist die Auflagehöhe des Messobjektes bekannt. Allerdings können die Auflagepunkte des Messobjekts immer nur sehr wenige Punkte sein, so dass die Integrationsintervalle groß sind. Bei Verwendung der Auflagepunkte als Stützpunkte ist das Ergebnis daher gegen kleine Messfehler sehr empfindlich.

Im Überlappungsbereich von zwei Kameras kann auch eine Zweikameramethode verwendet werden, bei der die Höhe eines Punktes durch Beobachtung mit zwei in ihrer Position und Orientierung bekannten Kameras bestimmt wird. Allerdings ist dies in der Praxis schwierig, da bei gekrümmten Oberflächen oft nur eine Kamera ein gespiegeltes Muster sieht. Um die gesamte Oberfläche jeweils durch mindestens zwei Kameras zu erfassen, müssten sehr viele Kameras und/oder Muster vorgesehen werden.

Teilweise haben spiegelnde Oberflächen, wie Autoscheiben, Bereiche, die kaum oder gar nicht spiegeln. Dies sind insbesondere der Rand oder bspw. aufgrund von Aufdrucken nicht reflektierende Bereiche. Diese können mit bekannten Methoden für nicht spiegelnde Oberflächen, wie Streifentriangulation oder Stereo-Messverfahren, vermessen werden. Diese Methode funktioniert allerdings nur, wenn nicht reflektierende Bereiche vorhanden sind. Außerdem werden auch in diesem Fall die Integrationsintervalle sehr groß, was zu einer großen Abhängigkeit gegen kleine Messfehler führt.

Daher können die folgenden Verfahren zur Höhenmessung der Stützpunkte verwendet werden.

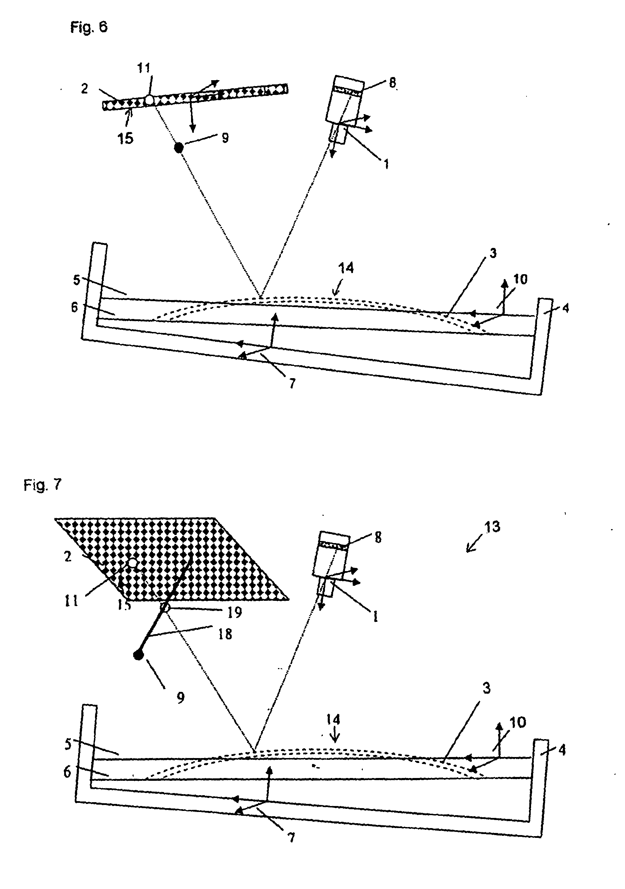

Gemäß einer ersten, nicht zur Erfindung gehörenden Möglichkeit werden in gewissem Abstand vor dem eigentlichen Muster 15 in einem vorgegebenen Raster von Stützpunkten kleine Marken 9 angebracht. Diese können an kleinen Stäbchen oder auf einer vorgelagerten Scheibe angeordnet sein. Die Position einer Marke 9 ist beispielhaft in Fig. 6 dargestellt. Die Marke 9 verdeckt einen kleinen Bereich 11 des Musters 15 für die Kamera 1. Durch die Erkennung der umliegenden Punkte des Musters 15 kann genau bestimmt werden, welcher Punkt 11 des Musters 15 durch die Marke 9 verdeckt ist. Damit kann bspw. mit einem Triangulationsverfahren die absolute Höhe der spiegelnden Oberfläche 14 an dieser Stelle bestimmt werden.

Die Position der Marken 9 kann bei einer Kalibrierung mit dem vorgeschlagenen Flüssigkeitsspiegel als Spiegeloberfläche 5, 6 in einem vor- oder nachgeschalteten Schritt bestimmt werden.

In Fig. 7 ist das erfindungsgemäße Verfahrens gezeigt, das nachfolgend erläutert wird und eine Verfeinerung des zuvor beschriebenen Verfahrens darstellt. Es wird in vergleichbarer Weise zu der Marke 9 ein dünnes Objekt 18 bekannter Form, die vorzugsweise mathematisch leicht beschreibbar ist (bspw. ein Stab, Faden oder Kreis), in einem gewissen Abstand vor dem Muster angebracht. Das Objekt 18 kann auch ein halbtransparentes Muster auf einer vorgelagerten Scheibe sein.

Dieses Objekt 18 wird in der Kamera 1 bzw. auf deren Pixeln 8 abgebildet. Da das Objekt 18 dünn oder halbtransparent ist, kann der abgedeckte Bereich 11 des Musters 15 bestimmt werden. Über den Bildpunkt bzw. das Kamerapixel 8 und das Abbildungszentrum der Kamera ist die Blickrichtung des Kamerapixels definiert, die eine von dem Pixel 8 ausgehende Gerade bildet. Diese Gerade ist als punktierte Linie in Fig. 7 dargestellt. Über diese Gerade und den bekannten verdeckten Musterpunkt 11 ist eine Ebene definiert. Wenn die Lage des Objekts 18 im Raum (bspw. aus einer Kalibrierung) bekannt ist, kann der Schnittpunkt 19 des Objektes 18 mit dieser Ebene bestimmt werden. Die einzige Bedingung hierfür ist, dass das Objekt 18 nicht vollständig in dieser Ebene liegt. Das kann bspw. durch verschiedene Objekte 18 mit verschiedenen Ausrichtungen erreicht werden.

Der verdeckte Musterpunkt 11 und der Schnittpunkt 19 definieren eine weitere, ebenfalls punktiert dargestellte Gerade. Der Schnittpunkt der beiden Geraden ist der gesuchte Oberflächenpunkt, an dem dann hochgenau der Oberflächenpunkt und daraus der Winkel zur Integration bestimmt werden kann.

Die Lage des Objekts 18 kann bei der Kalibrierung des Systems entweder durch externe Vermessung, vorzugsweise aber durch einen zweiten Kalibrierschritt bestimmt werden. In diesem zweiten Schritt wird nach der Kalibrierung von Kamera 1 und Musterträger 2 die Lage des Objekts 18 bestimmt, solange die plane Spiegeloberfläche 5, 6 noch vorhanden ist. Dies ist möglich, weil zu diesem Zeitpunkt die Form bzw. Anordnung des Spiegels 5, 6 bekannt ist.

Mit dem vorgeschlagenen Verfahren ist es daher möglich, die obere spiegelnde Oberfläche eines transparenten Objekts sicher zu vermessen. In weiten Bereichen können auch darunter liegende Oberflächen vermessen werden, ohne dass ein besonders großer apparativer Aufwand vorgenommen werden muss.

### Bezugszeichenliste

- 1: Kamera
- 2: Musterträger, Flachbildschirm
- 3: Objekt
- 4: Wanne
- 5: Spiegeloberfläche zur Kalibrierung
- 6: Spiegeloberfläche zur Kalibrierung
- 7: weltfestes Koordinatensystem
- 8: Bild, Kamerapixel
- 9: Marke
- 10: gemeinsames Koordinatensystem
- 11: abgedeckter Bereich
- 12: Bildfeld einer Kamera
- 13: System
- 14: spiegelnde/reflektierende Oberfläche
- 15: Muster
- 16: Koordinatensystem der Kamera
- 17: Koordinatensystem des Musters
- 18: Objekt
- 19: Schnittpunkt

## Patentansprüche

1. Verfahren zur Formmessung einer spiegelnden Oberfläche (14) mit einem System, welches mindestens ein Muster (15) zur Reflexion an der spiegelnden Oberfläche (14) und mindestens eine Kamera (1) zur pixelweisen Betrachtung des auf der Oberfläche (14) reflektierten Musters (15) aufweist, wobei die Position und Orientierung der Kamera (1) und des Musters (15) sowie für jedes Pixel (8) der Kamera (1) die Blickrichtung bekannt sind, wobei aus den für die Pixel (8) bekannten Blickrichtungen der Kamera (1) und den der Abbildung des reflektierten Musters (15) auf Pixeln (8) der Kamera (1) entsprechenden Positionen des Musters (15) der Oberflächenwinkel und die Oberflächenhöhe zur Formmessung bestimmt werden, wobei zur genauen Bestimmung der Oberflächenhöhe eines Stützpunkts ein linienförmiges Objekt (18) vor dem Muster derart angeordnet wird, dass zumindest ein Punkt (19) des Objekts (18) einen Musterpunkt (11) verdeckt, wobei die Lage des Objekts (18) im Raum bekannt ist, anschließend eine Ebene aus der bekannten Blickrichtung des den Musterpunkt (11) abbildenden Pixels und dem Musterpunkt (11) bestimmt wird und der Punkt (19) als Schnittpunkt des Objekts (18) mit dieser Ebene ermittelt wird sowie der Stützpunkt als Schnittpunkt zwischen der bekannten Blickrichtung des den Musterpunkt (11) abbildenden Pixels und der Geraden durch den Musterpunkt (11) und den Punkt (19) ermittelt wird.

2. Verfahren nach Anspruch 1, bei dem zur Analyse des von der Kamera (1) aufgenommenen Musters (15) ein phasenauswertendes Verfahren, ein zeitlich kodiertes Verfahren und/oder ein frequenzkodiertes Verfahren verwendet wird.

3. Verfahren nach einem der vorhergehenden Ansprüche, bei dem nach Ermittlung der Oberflächenhöhe für den Stützpunkt auf der reflektierenden Oberfläche (14) die Oberflächenhöhe in einem dem Stützpunkt benachbarten Oberflächenpunkt abgeschätzt und daraus der Oberflächenwinkel bestimmt wird.

4. Verfahren nach einem der vorhergehenden Ansprüche, bei dem mehrere Stützpunkte in einem Raster über die zu vermessende Oberfläche (14) gelegt werden.

5. Verfahren nach einem der vorhergehenden Ansprüche, bei dem das Muster (15) beginnend bei einem groben Muster (15) sukzessive verfeinert wird.

6. Verfahren nach einem der vorhergehenden Ansprüche, bei dem verschiedene Musterstrukturen abgebildet werden.

7. Verfahren nach einem der vorhergehenden Ansprüche, bei dem die Messung bei transparenten Gegenständen vorgenommen wird.

8. Verfahren nach Anspruch 7, bei dem in einem ersten Verfahrensschritt die oben liegende Oberfläche und/oder die Bereiche der Oberfläche vermessen werden, in denen die Mehrfachreflexionen der verschiedenen Oberflächen getrennt werden können, und dass in einem zweiten Verfahrensschritt die Mehrfachreflexionen ausgewertet werden.

9. Verfahren nach Anspruch 7 oder 8, bei dem in einem ersten Verfahrensschritt eine vorbekannte Form und Position der Oberfläche verwendet wird und berechnet wird, wie sich das bekannte Muster in Mehrfachreflexionen darstellt, und dass in einem zweiten Verfahrensschritt die Mehrfachreflexionen ausgewertet werden.

10. Verfahren nach einem der vorgehenden Ansprüche, bei dem die Form des Musters (15) von der Auflösung abhängig ist.

## Claims

1. Method for the shape measurement of a reflective surface (14) with a system which has at least one pattern (15) for reflection on the reflective surface (14) and at least one camera (1) for the pixel by pixel evaluation of the pattern (15) reflected on the surface (14), wherein the position and orientation of the camera (1) and of the pattern (15) and also the viewing direction for each pixel (8) of the camera (1) are known, wherein the surface angle and the surface height are determined for shape measurement from the viewing directions of the camera (1) known for the pixels (8) and the positions of the pattern (15) which correspond to the imaging of the reflected pattern (15) on pixels (8) of the camera (1), wherein, for the precise determination of the surface height of a support point, a linear object (18) is arranged in front of the pattern in such a manner that at least one point (19) of the object (18) covers a pattern point (11), wherein the position of the object (18) in space is known, one plane is subsequently determined from the known viewing direction of the pixel imaging the pattern point (11) and the pattern point (11) and the point (19) is established as the intersecting point of the object (18) with this plane and also the support point is established as an intersecting point between the known viewing direction of the pixel imaging the pattern point (11) and the straight line through the pattern point (11) and the point (19).

2. Method according to Claim 1, in which a phase-evaluation method, a time-encoded method and/or a frequency-encoded method is used for the analysis of the pattern (15) recorded by the camera (1).

3. Method according to any one of the preceding claims, in which, after establishing the surface height for the support point on the reflective surface (14), the surface height at a surface point adjacent to the support point is estimated and the surface angle is determined therefrom.

4. Method according to any one of the preceding claims, in which a plurality of support points are set in a grid above the surface (14) to be measured.

5. Method according to any one of the preceding claims, in which the pattern (15) is successively refined, starting with a coarse pattern (15).

6. Method according to any one of the preceding claims, in which various pattern structures are imaged.

7. Method according to any one of the preceding claims, in which the measurement is undertaken in the case of transparent objects.

8. Method according to Claim 7, in which the upper surface and/or the regions of the surface in which the multiple reflections of the various surfaces can be separated are measured in a first method step, and in that the multiple reflections are evaluated in a second method step.

9. Method according to Claim 7 or 8, in which, in a first method step, a previously known shape and position of the surface is used and how the known pattern presents itself in multiple reflections is calculated and in that the multiple reflections are evaluated in a second method step.

10. Method according to any one of the preceding claims, in which the shape of the pattern (15) is dependent on the resolution.

## Revendications

1. Procédé pour la mesure de la forme d'une surface (14) réfléchissante comprenant un système, qui présente au moins un dessin (15) pour la réflexion sur la surface (14) réfléchissante et au moins une camera (1) pour l'observation pixel par pixel du dessin (15) réfléchi sur la surface (14), la position et l'orientation de la camera (1) et du dessin (15) ainsi que le sens de visée pour chaque pixel (8) de la camera (1) étant connus, l'angle de surface et la hauteur de la surface étant déterminés pour la mesure de la forme à partir des sens de visée, connus pour les pixels (8), de la camera (1) et des positions, correspondant à la représentation du dessin (15) réfléchi sur des pixels (8) de la camera (1), du dessin (15), un objet (18) de forme linéaire étant disposé devant le dessin pour la détermination précise de la hauteur de surface d'un point de soutien de telle sorte qu'au moins un point (19) de l'objet (18) masque un point du dessin (11), la position de l'objet (18) dans l'espace étant connue, un plan étant déterminé ensuite à partir du sens de visée connu du pixel reproduisant le point d'image (11) et du point d'image (11) et le point (19) étant déterminé comme point d'intersection de l'objet (18) avec ce plan et le point d'appui étant déterminé comme point d'intersection entre le sens de visée connu du pixel reproduisant le point d'image (11) et la droite passant par le point d'image (11) et le point (19).

2. Procédé selon la revendication 1, avec lequel un procédé d'analyse de phase, un procédé codé dans le temps et/ou un procédé codé en fréquence sont utilisés pour l'analyse du dessin (15) enregistré par la caméra (1).

3. Procédé selon l'une quelconque des revendications précédentes, avec lequel, après la détermination de la hauteur de surface pour le point d'appui sur la surface (14) réfléchissante, la hauteur de surface est évaluée dans un point de surface voisin du point d'appui et l'angle de surface est déterminé à partir de là.

4. Procédé selon l'une quelconque des revendications précédentes, avec lequel plusieurs points d'appui sont placés dans une trame sur la surface (14) à mesurer.

5. Procédé selon l'une quelconque des revendications précédentes, avec lequel le dessin (15) est affiné de façon successive en commençant avec un dessin (15) grossier.

6. Procédé selon l'une quelconque des revendications précédentes, avec lequel différentes structures de dessin sont représentées.

7. Procédé selon l'une quelconque des revendications précédentes, avec lequel la mesure est effectuée avec des objets transparents.

8. Procédé selon la revendication 7, avec lequel, dans une première étape du procédé, la surface située en haut et/ou les zones de la surface, dans lesquelles les réflexions multiples des différentes surfaces peuvent être séparées, sont mesurées, et en ce que les réflexions multiples sont analysées dans une seconde étape du procédé.

9. Procédé selon la revendication 7 ou 8, avec lequel, dans une première étape du procédé, une forme et une position déjà connues de la surface sont utilisées et on calcule de quelle façon le dessin se présente dans des réflexions multiples et en ce que les réflexions multiples sont analysées dans une seconde étape du procédé.

10. Procédé selon l'une quelconque des revendications précédentes, avec lequel la forme du dessin (15) est dépendante de la résolution.
